# FASCICULE DE BREVET EUROPEEN

(11) **EP 0 644 641 B1**
(45) Date de publication et mention de la délivrance du brevet: **24.11.1999**
(21) Numéro de dépôt: 94402054.4
(22) Date de dépôt: 14.09.1994
(51) Int. Cl.: H02G 15/184, H02G 15/103

(54) **Equipement accessoire de raccordement d'un câble d'énergie et câble d'énergie ainsi équipé**
Garnitur zum Verbinden eines Energiekabels und damit ausgerüstetes Energiekabel
Equipment for power cable junction and power cable equipped therewith

(30) Priorité: 17.09.1993 FR 9311118
(43) Date de publication de la demande: 22.03.1995
(73) Titulaire: ALCATEL, 75008 Paris (FR)
(72) Inventeur: Janah, Hakim, F-62100 Sangatte (FR); Bezille, José, F-59240 Dunkerque (FR); Becker, Jean, F-62610 Autingues (FR); Gahungu, François, F-62100 Calais (FR); Assier, Jean-Claude, F-91860 Epinay Sous Senart (FR); Aladenize, Bernard, F-91360 Epinay Sur Orge (FR); Le Mehaute, Alain, F-91190 Gif Sur Yvette (FR)
(74) Mandataire: Buffière, Michelle

(56) Documents cités:
- EP-A- 0 507 676
- GB-A- 2 111 769
- US-A- 4 822 952

## Description

La présente invention concerne les câbles d'énergie moyenne, haute ou très haute tension pour utilisation en courant continu ou alternatif. Elle porte plus particulièrement sur un équipement accessoire de raccordement d'un tel câble et sur le câble d'énergie ainsi équipé.

Les câbles d'énergie comportent une âme conductrice, un écran semi-conducteur interne recouvrant l'âme, une couche diélectrique d'isolation sur l'écran semi-conducteur interne, un écran semi-conducteur externe sur la couche diélectrique et une gaine de protection extérieure.

La couche diélectrique d'isolation est notamment un isolant polymérique rubané ou extrudé. La gaine de protection peut être métallique, en particulier en plomb pour les câbles d'énergie enterrés, et alors jouer également le rôle d'écran métallique de masse, ou peut être isolante et alors en général associée à un écran métallique sous-jacent de masse. Les écrans semi-conducteurs sont réalisés par exemple en un matériau polymérique contenant du noir de carbone.

Les équipements de raccordement montés sur les câbles d'énergie sont notamment des terminaisons de raccordement au réseau ou à un appareillage, des dérivations entre câbles ou de raccordement en dérivation d'un appareillage, ou encore des jonctions de deux câbles (comme ceux décrits par exemple dans GB-A-2 111 769 ou US-A-4 822 952).

Ces équipements de raccordement comportent de manière connue :
- une pièce de connexion qui est électriquement et mécaniquement raccordée à l'extrémité de l'âme dénudée de la partie terminale du ou des câbles concernés,
- un équipement accessoire de raccordement, associé à la pièce de connexion et assurant la reconstitution des couches successives du câble dénudées sur une longueur suffisante, et l'arrêt de ces couches. Cet équipement accessoire de raccordement recouvre tout ou partie de la pièce de connexion ou prolonge simplement la pièce de connexion, en lui étant alors jointif ou non et en constituant un adaptateur ou réducteur en amont de la pièce de connexion sur le câble. Il peut éventuellement assurer directement la protection de l'équipement de raccordement mais est plus souvent recouvert par un manchon associé de protection extérieure recouvrant également tout ou partie de la pièce de connexion.

De manière habituelle, les couches de la partie terminale du câble sont dénudées en dégradé, pour l'accès à chacune d'elles et à l'âme et le montage de la pièce de connexion et de l'équipement accessoire associé.

Les équipements accessoires doivent en outre assurer une tenue diélectrique, en particulier au droit de l'arrêt des écrans semi-conducteurs interne et externe du câble. A cet effet, ils peuvent être réalisés principalement en matière isolante (sous forme d'un rubanage ou d'un manchon), et porter ou être montés sur une couche semi-conductrice prévue aux endroits convenables pour assurer la reconstitution de l'écran semi-conducteur interne. D'autre part, pour assurer la reconstitution de l'écran semi-conducteur externe, ils sont recouverts, une fois montés sur le câble, d'une couche semi-conductrice adaptée.

Les équipements accessoires de raccordement sont de préférence formés, de manière largement connue, par un simple manchon isolant dont la face interne est semi-conductrice sur au moins une partie de la longueur du manchon. Un tel manchon vient recouvrir au moins les parties dénudées de l'écran semi-conducteur interne et de la couche diélectrique. Il est relativement rigide et alors de section interne adaptée aux sections des parties à recouvrir, ou est rétractable sur ces parties à recouvrir. La continuité de l'écran semi-conducteur externe est assurée en reprise par exemple par rubanage d'une couche semi-conductrice recouvrant le manchon et s'étendant jusqu'à l'écran semi-conducteur externe du câble.

Un tel manchon rigide ou rétractable doit assurer un contact radial uniforme entre les écrans semi-conducteurs interne et externe et les parties semi-conductrices correspondantes de ses faces interne et externe, pour une répartition homogène du champ électrique. A cet effet notamment, la partie terminale du manchon, autour de l'écran semi-conducteur externe, est souvent semi-conductrice dans toute son épaisseur rendue relativement réduite, et la face externe semi-conductrice part de cette partie terminale semi-conductrice en présentant une forme conique, pour former un déflecteur intégré au manchon et ainsi assurer la répartition homogène du champ électrique au droit de l'arrêt de l'écran semi-conducteur externe du câble.

La réalisation de tels manchons est relativement longue et coûteuse. Leur mise en place, en incluant l'opération préliminaire de dénudage de la partie terminale du câble, est également longue. Elle est en outre délicate pour un positionnement correct des manchons de grande longueur notamment sur les jonctions de câbles, et peut entraîner une dégradation des fonctions à assurer.

La présente invention a pour but d'éviter ces inconvénients, en simplifiant l'obtention des fonctions assurées par les équipements accessoires de raccordement et en réduisant le temps et les difficultés pour leur mise en place correcte. Elle a en outre pour but d'améliorer la tenue diélectrique obtenue.

La présente invention propose à cet effet un équipement accessoire de raccordement de câble d'énergie, destiné à être monté sur une partie terminale dénudée dudit câble et à assurer la tenue diélectrique autour de ladite partie terminale dénudée, ledit câble comportant une âme conductrice et successivement, autour de ladite âme, un écran semi-conducteur interne, une couche diélectrique, un écran semi-conducteur externe et une gaine de protection extérieure et ledit équipement accessoire comportant une première partie destinée à assurer la reconstitution de ladite couche diélectrique, une deuxième et une troisième parties associées destinées à assurer la reconstitution dudit écran semi-conducteur interne et dudit écran semi-conducteur externe respectivement,
caractérisé en ce que lesdites première et deuxième parties dudit équipement accessoire de raccordement sont réalisées identiquement et simultanément en une matrice polymérique isolante contenant au moins un polymère conducteur, incorporé dans ladite matrice polymérique avec un taux massique tel que la conductivité électrique résultante desdites première et deuxième parties est inférieure à 10⁻¹⁴ S/cm pour une utilisation en courant continu et inférieure à 10⁻¹⁰ S/cm pour une utilisation en courant alternatif, et en ce que ladite troisième partie a une conductivité électrique inférieure à 1 S/cm.

Grâce à l'invention, il n'est plus nécessaire de réaliser un équipement accessoire de raccordement en trois parties distinctes. L'équipement accessoire de raccordement selon l'invention ne comporte que deux parties distinctes, ce qui simplifie sa réalisation et sa mise en place.

Du fait du matériau particulier utilisé pour réaliser les première et deuxième parties de l'équipement, la conductivité électrique de ce dernier varie localement en fonction du champ électrique, de sorte que, au voisinage de l'écran semi-conducteur interne du câble, l'équipement se comporte comme un écran semi-conducteur, et au voisinage de la couche diélectrique d'isolation du câble, l'équipement se comporte sensiblement comme un isolant.

En outre, l'équipement selon l'invention permet d'éviter un dénudage complet du câble ; il suffit en effet de mettre l'âme conductrice et l'écran semi-conducteur externe à nu, en effectuant une coupe droite (ou éventuellement biaise) des différentes couches entre ces deux parties.

De manière avantageuse, pour obtenir les conductivités souhaitées, la matrice polymérique isolante incorpore au plus 20% en masse d'un polymère conducteur choisi parmi des polymères non dopés et dédopés ; lorsque le polymère conducteur utilisé est un polymère conducteur autodopé, son taux massique dans la matrice polymérique est d'au plus 5%.

L'équipement accessoire selon l'invention peut avantageusement présenter en outre au moins l'une des caractéristiques additionnelles suivantes :
- il forme un manchon, à alésage épaulé intérieurement, entourant au moins l'écran semi-conducteur en partie et la couche diélectrique sous-jacente dudit câble, et ayant sur une première portion terminale dudit alésage une section interne sensiblement identique à la section externe de l'une des couches périphériques du câble, définies par ledit écran semi-conducteur externe et ladite gaine de protection extérieure dudit câble, pour recouvrir cette couche périphérique, ledit manchon présentant, sur une deuxième portion dudit alésage, une section interne sensiblement identique à la section de l'âme du câble et un épaulement unique entre lesdites première et deuxième portions dudit alésage,
- ledit épaulement unique entre lesdites première et deuxième portions dudit alésage est droit ou est tronconique.

L'invention a également pour objet un câble d'énergie, équipé d'un tel équipement, caractérisé en ce que ladite partie terminale dudit câble est dénudée en continu à travers simultanément au moins ledit écran semi-conducteur externe, ladite couche diélectrique et ledit écran semi-conducteur interne, jusqu'à ladite âme, et porte ledit équipement de section intérieure adaptée à ladite partie terminale ainsi dénudée.

Avantageusement ce câble raccordé par un élément de connexion à un autre câble d'énergie à partie terminale également dénudée, est caractérisé en ce que ledit équipement est surmoulé directement sur ledit élément de connexion et de part et d'autre sur les parties terminales dénudées desdits câbles.

D'autres caractéristiques et avantages de la présente invention ressortiront de la description ci-après d'exemples de réalisation illustrés dans les dessins ci-annexés. Dans ces dessins :
- la figure 1 est une vue en élévation et en coupe partielle montrant un équipement accessoire de raccordement selon l'invention monté sur un câble d'énergie,
- les figures 2 et 3 sont des vues analogues à la figure 1 pour des variantes de réalisation données par rapport à cette figure 1,
- la figure 4 est une vue en élévation et coupe partielle illustrant une jonction de câbles d'énergie et son équipement accessoire de raccordement selon l'invention.

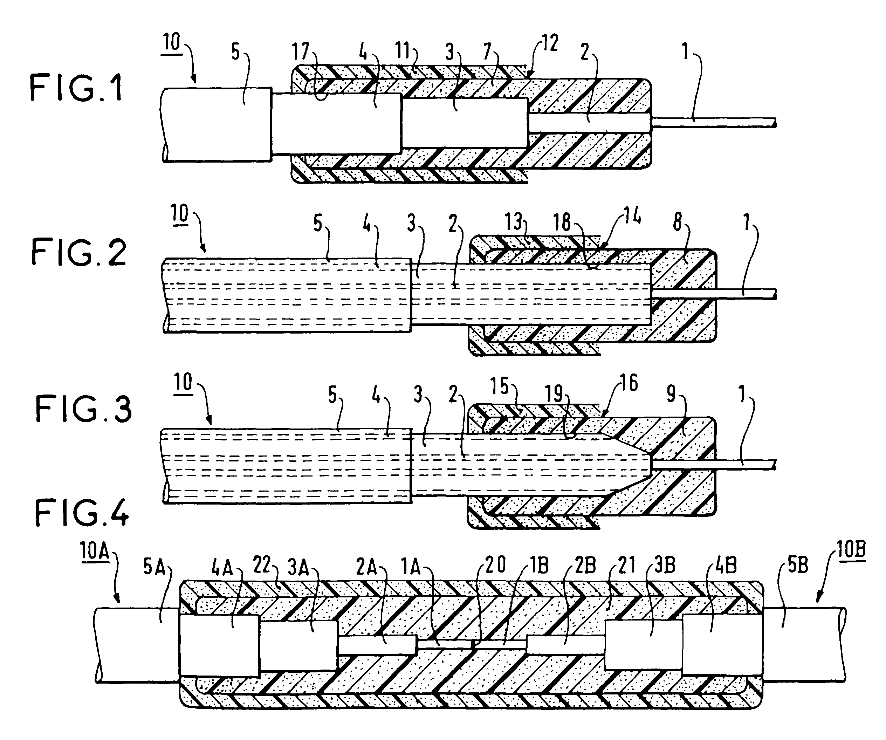

Dans les figures 1 à 4, les différentes parties constitutives de chaque câble d'énergie représenté sont identiques d'une figure à l'autre et sont désignées par les mêmes références numériques, ces références numériques étant simplement accompagnées de la lettre A ou B supplémentaire dans la figure 4. Le ou les câbles sont eux-mêmes désignés sous la référence globale 10, accompagnée de la lettre A pour l'un des câbles et de la lettre B pour l'autre, dans la figure 4.

On notera par ailleurs au préalable que toutes les conductivités électriques sont données à la température ambiante.

Chaque câble comporte une âme conductrice 1 et successivement un écran semi-conducteur interne 2, une couche diélectrique d'isolation 3, un écran semi-conducteur externe 4 et une gaine de protection extérieure 5. Cette gaine de protection est métallique et notamment en plomb ou en alliage de plomb, ou peut être isolante et est alors en général associée à un écran métallique directement sous-jacent, non représenté.

Dans la figure 1, on voit que les parties constitutives du câble 10 ont été dénudées successivement en dégradé sur la partie terminale du câble et que cette partie terminale ainsi préparée porte un adaptateur 7 selon l'invention, dit également réducteur, entourant l'écran semi-conducteur externe dénudé 4 en partie, la couche diélectrique 3 dénudée et l'écran semi-conducteur interne 2 dénudé. Au-dessus de l'adaptateur 7 se trouve une couche semi-conductrice 11 servant à assurer la reconstitution de l'écran semi-conducteur externe 4 dénudé ainsi que la tenue diélectrique au niveau de ce dernier, et se prolongeant à cet effet jusqu'à lui en l'entourant en partie. L'ensemble comprenant l'adaptateur 7 et la couche semi-conductrice 11 constitue un équipement accessoire de raccordement 12 selon l'invention.

L'adaptateur 7 est réalisé, selon l'invention, en un matériau constitué par une matrice polymérique isolante contenant un polymère conducteur dédopé ou non dopé, incorporé avec un taux qui est au plus de 20% en masse dans la matrice.

Selon une variante également avantageuse de l'invention, l'adaptateur 7 est réalisé en un matériau constitué par une matrice polymérique isolante contenant un polymère conducteur autodopé, incorporé avec un taux au plus égal à 5% en masse dans la matrice.

La couche semi-conductrice 11 a conductivité inférieure à 1 S/cm, aussi bien en courant continu qu'en courant alternatif, et peut être réalisée par exemple en un matériau du type de celui décrit dans le document EP-A-0 507 676, c'est-à-dire être constituée par une matrice polymérique isolante qui contient un polymère conducteur dédopé ou non dopé incorporé dans la matrice avec un taux de 5 à 70% en masse, de préférence de 20 à 30%, ou bien un polymère conducteur autodopé, incorporé dans la matrice avec un taux supérieur à 5%, et de préférence de 10 à 40%.

La couche 11 peut également être réalisée en un matériau semi-conducteur usuel.

L'adaptateur 7 forme un manchon recouvrant les parties dénudées de l'écran semi-conducteur externe 4 (en partie), de la couche diélectrique 3 et de l'écran semi-conducteur interne 2. Il est directement moulé sur ces seules parties à recouvrir, ou est prémoulé et positionné sur ces parties puis éventuellement alors solidarisé mécaniquement au bout, en particulier par chauffage de l'extrémité correspondante du manchon en place et/ou de celle de l'écran semi-conducteur externe 4. Il présente un alésage central 17 dont la longueur et la section étagée correspondent aux longueurs respectives et aux sections respectives des parties qu'il recouvre.

En variante, l'adaptateur 7 peut être constitué à partir d'une bande extrudée, ayant la même composition que le manchon précité, qui est enroulée autour des parties à recouvrir et leur est solidarisée mécaniquement.

Dans la figure 2, la partie terminale du câble 10 est préparée par une coupe droite de l'écran semi-conducteur interne 2, de la couche diélectrique 3 et de l'écran semiconducteur externe 4 autour de l'âme 1, la gaine extérieure de protection 5 étant en partie retirée pour dénuder une partie de l'écran semi-conducteur externe 4. La partie terminale ainsi préparée porte un adaptateur 8 selon l'invention, recouvert d'une couche semi-conductrice 13 identique à la couche 11, l'adaptateur 8 et la couche 13 formant un équipement accessoire de raccordement 14 selon l'invention.

L'adaptateur 8 est de même composition que l'adaptateur 7 de la figure 1. Il recouvre sur une courte longueur l'âme dénudée, ainsi que l'écran semi-conducteur externe 4 dénudé. Il constitue un manchon qui est directement moulé en place ou est prémoulé, positionné en place sur la partie terminale préparée du câble 10 et est rendu avantageusement adhérent sur la section droite de coupe pour un bon contact du manchon sur celle-ci.

L'alésage 18 de l'adaptateur 8 présente un épaulement unique à angle droit. Sa section de part et d'autre de cet épaulement correspond aux sections respectives de l'écran semi-conducteur externe 4 et de l'âme 1.

La couche semi-conductrice 13 recouvre en partie l'adaptateur 8 et s'étend jusqu'à l'écran semi-conducteur externe 4 en le recouvrant en partie.

Dans la figure 3, la partie terminale du câble 10 est préparée, non pas par une coupe droite comme dans la figure 2 mais par une coupe biaise continue de l'écran semiconducteur externe 4 et de la couche diélectrique 3 et une coupe droite, à la suite, de l'écran semi-conducteur interne 2, pour la mise à nu de l'âme 1. Elle porte un adaptateur 9 selon l'invention, analogue à l'adaptateur 8, dont l'alésage 19 présente des portions terminales opposées dont les sections respectives correspondent à celles de l'écran semiconducteur externe 4 et de l'âme 1, respectivement, mais un épaulement intermédiaire tronconique correspondant à la coupe biaise de dénudage de l'âme 1.

Cette coupe biaise de dénudage permet un meilleur contact de l'adaptateur 9 ainsi qu'une meilleure adhésion sur la section tronconique de coupe.

L'adaptateur 9 est recouvert d'une couche semi-conductrice 15 identique à la couche semi-conductrice 13 et qui s'étend jusqu'à l'écran semi-conducteur externe 4 en le recouvrant en partie. L'adaptateur 9 et la couche 15 forment un équipement accessoire de raccordement 16 selon l'invention.

Dans la figure 4 illustrant une jonction de deux câbles 10A et 10B, les parties terminales des câbles à raccorder sont dénudées successivement en dégradé ou en variante peuvent être dénudées par une coupe biaise. Un élément connexion 20 raccorde les extrémités des âmes 1A et 1B dénudées. Un manchon ou adaptateur 21 selon l'invention, de même composition que les adaptateurs des figures 1 à 3, est moulé sur l'élément de connexion 20 et de part et d'autre sur les parties dénudées et les portions terminales des écrans semi-conducteurs 4A et 4B des deux câbles 10A et 10B. Il renforce la tenue mécanique du raccordement des âmes 1A et 1B, de sorte que l'élément de connexion 20 peut être constitué par une pièce de connexion de raccordement mécanique et électrique ou peut être constitué par une simple soudure de raccordement électrique mais de relativement faible tenue mécanique.

Le manchon 21 est recouvert d'une couche semi-conductrice 22 qui se prolonge sur les écrans semiconducteurs 4A et 4B et assure ainsi leur continuité.

En variante, le manchon 21 surmoulé directement en place peut être remplacé par un rubanage de même composition mis en place sur les parties à recouvrir.

Bien entendu, la jonction peut comporter en outre, de manière connue et non représentée, un dissipateur thermique, monté autour de la pièce de connexion et s'étendant de part et d'autre de cette dernière sur les âmes dénudées, ainsi que deux réducteurs, montés d'un côté et de l'autre du dissipateur sur les couches diélectriques 3A et 3B dénudées des deux câbles.

Avantageusement, le manchon 21 assure simultanément les fonctions d'un tel dissipateur thermique et des deux réducteurs dans cette jonction, ainsi rendus non nécessaires dans la jonction.

On précise ci-après la composition de l'équipement accessoire de raccordement selon l'invention et sa fonction principale résultant de cette composition.

La matrice polymérique isolante et le polymère conducteur de cet équipement accessoire sont constitués par des polymères qui sont identiques à ceux utilisés dans la réalisation de l'écran semi-conducteur décrit dans le document EP-A-0 507 676.

Ainsi, la matrice polymérique de l'équipement accessoire comprend au moins un polymère thermoplastique, choisi parmi les résines acryliques, styréniques vinyliques et cellulosiques, les polyoléfines, les polymères fluorés, les polyéthers, les polyimides, les polycarbonates, les polyuréthannes, les silicones leurs copolymères, et les mélanges entre homopolymères et entre homopolymères et copolymères.

En particulier, ce polymère thermoplastique est choisi parmi le polypropylène (PP), le polyéthylène (PE), le copolymère d'éthylène et d'acétate de vinyle (EVA), l'éthylène-proprylène-diène-monomère (EPDM), le polyvinylidène fluoré (PVDF), l'éthylène-butylacrylate (EBA), seuls ou en mélange.

En variante, cette matrice polymérique comprend au moins un polymère thermodurcissable choisi parmi les polyesters, les résines époxydes et les résines phénoliques.

Le ou les polymères conducteurs non dopés ou dopés et alors dédopés incorporés dans cette matrice polymérique sont choisis dans le groupe comprenant la polyaniline, le polythiophène, le polypyrrole, le polyacétylène, le polyparaphénylène, les polyalkyltiophènes, leurs dérivés et leurs mélanges.

Ces polymères non dopés et dédopés ne contiennent pas de groupements ioniques. Leur conductivité électrique intrinsèque, mesurée en courant continu, est très faible et de l'ordre de 10⁻¹⁰ à 10⁻⁹ S/cm. La conductivité de l'équipement accessoire, constitué par cette matrice polymérique contenant au plus 20% en masse de polymère non dopé ou dédopé, est de l'ordre de 10⁻¹⁴ S/cm aux bas champs électriques pour une utilisation en courant continu, et de 10⁻¹⁰ S/cm aux bas champs électriques pour une utilisation en courant alternatif. Elle peut être localement de l'ordre de 10⁻⁹ S/cm aux champs électriques élevés à répartir.

Lorsque l'on incorpore dans la matrice des polymères autodopés, ces derniers sont choisi dans le groupe comprenant les polyanilines autodopées présentant des noyaux benzéniques ou benzéniques et quinoniques, qui portent des greffons constitués pour les uns par un radical hydrocarboné, comportant de 2 à 8 atomes de carbone et interrompu par au moins un hétéro-atome, et pour les autres par une fonction acide fort ou un de ses sels, ledit hétéro-atome étant lui-même choisi parmi O et S et la fonction acide fort parmi les résidus d'acides sulfonique, phosphonique et phosphorique ou de leurs sels.

La conductivité électrique intrinsèque, mesurée en courant continu, de ces polymères autodopés est en moyenne de l'ordre de 10⁻³ à 10⁻² S/cm. Elle est en outre ajustable à souhait entre 10⁻⁵ et 1 S/cm, par variation du rapport moléculaire des deux types de greffons. La conductivité électrique de l'équipement accessoire, constitué par la matrice polymérique ci-avant à laquelle est ajouté au plus 5% en masse de ce polymère autodopé, est elle-même ajustable et de l'ordre ou inférieure à 10⁻¹⁴ S/cm pour une utilisation aux bas champs électriques en courant continu, et de l'ordre ou inférieure à 10⁻¹⁰ S/cm pour une utilisation en courant alternatif aux bas champs électriques.

Un tel équipement accessoire de raccordement en cette composition est fondamentalement diélectrique, sauf localement le cas échéant lorsqu'il est soumis à un champ électrique élevé et devient alors substantiellement conducteur pour jouer le rôle de déflecteur intégré qui est de plus adapté au champ électrique existant ainsi réparti.

Parmi les autres avantages que procure l'équipement accessoire de raccordement selon la présente invention, on cite notamment :
- la simplicité et la rapidité possible de l'opération préliminaire de dénudage de la partie terminale du ou des câbles,
- la réalisation aisée et rapide du manchon ou du ruban et la possible mise en oeuvre directe de l'équipement accessoire par surmoulage de la partie terminale préparée du ou des câbles,
- la fiabilité accrue de l'équipement accessoire,
- les fonctions de dissipateur thermique et de réducteurs assurées simultanément dans une jonction, ainsi elle-même simplifiée.

L'équipement accessoire selon l'invention peut être réalisé par un procédé classique, avec éventuellement addition de charges minérales, de stabilisants, d'agents réticulants, etc... aux différents matériaux utilisés.

Les couches semi-conductrices servant à assurer la reconstitution des écrans semi-conducteurs externes peuvent être constituées de tout matériau semi-conducteur usuel.

Par ailleurs, au-dessus de l'équipement accessoire selon l'invention, on peut disposer, à la manière habituelle, une enveloppe de protection externe.

## Revendications

1. Equipement accessoire de raccordement (12) de câble d'énergie, destiné à être monté sur une partie terminale dénudée dudit câble (10) et à assurer la tenue diélectrique autour de ladite partie terminale dénudée, ledit câble comportant une âme (1) conductrice et successivement, autour de ladite âme, un écran semi-conducteur interne (2), une couche diélectrique (3), un écran semi-conducteur externe (4) et une gaine de protection extérieure (5) et ledit équipement accessoire comportant une première partie (7) destinée à assurer la reconstitution de ladite couche diélectrique, une deuxième (7) et et une troisième parties (11) associées destinées à assurer la reconstitution dudit écran semi-conducteur interne et dudit écran semi-conducteur externe respectivement,
caractérisé en ce que lesdites première et deuxième parties dudit équipement accessoire de raccordement sont réalisées identiquement et simultanément en une matrice polymérique isolante contenant au moins un polymère conducteur, incorporé dans ladite matrice polymérique avec un taux massique tel que la conductivité électrique résultante desdites première et deuxième parties est inférieure à 10⁻¹⁴ S/cm pour une utilisation en courant continu, et inférieure à 10⁻¹⁰ S/cm pour une utilisation en courant alternatif, et en ce que ladite troisième partie (11) a une conductivité électrique inférieure à 1 S/cm.

2. Equipement selon la revendication 1 et constituant un manchon, à alésage épaulé intérieurement, entourant au moins l'écran semi-conducteur externe en partie et la couche diélectrique sous-jacente dudit câble, et ayant sur une première portion terminale dudit alésage (17, 18, 19) une section interne sensiblement identique à la section externe de l'une des deux couches périphériques définies par ledit écran semi-conducteur externe et la gaine de protection extérieure dudit câble, caractérisé en ce que ledit manchon (8, 9) présente sur une deuxième portion dudit alésage (18, 19) une section interne sensiblement identique à la section de ladite âme et un épaulement unique entre lesdites première et deuxième portion de cet alésage (18, 19).

3. Equipement selon la revendication 2, caractérisé en ce qu'il présente un épaulement unique et droit, entre lesdites première et deuxième portions dudit alésage (18).

4. Equipement selon la revendication 2, caractérisé en ce qu'il présente un épaulement unique et tronconique entre lesdites première et deuxième portions dudit alésage (19).

5. Câble d'énergie équipé de l'équipement selon l'une des revendications 2 à 4, caractérisé en ce que ladite partie terminale dudit câble est dénudée en continu simultanément depuis au moins ledit écran semi-conducteur externe (4) jusqu'à ladite âme (1), et porte ledit équipement (8, 9, 21) de section intérieure adaptée et en contact sur la partie terminale ainsi dénudée.

6. Câble d'énergie selon la revendication 5 et raccordé par un élément de connexion à un autre câble d'énergie à partie terminale également dénudée, caractérisé en ce que ledit équipement est surmoulé directement sur ledit élément de connexion (20) et de part et d'autre sur les parties terminales dénudées desdits câbles (10A, 10B) et constitue avec ledit élément de connexion une jonction desdits câbles.

## Patentansprüche

1. Verbindungszusatzeinrichtung (12) eines Energiekabels, bestimmt zur Montage an einem blanken Endbereich des Kabels (10) und zur Sicherung des dielektrischen Verhaltens um den blanken Endbereich, wobei das Kabel eine leitende Seele (1) besitzt, und aufeinanderfolgend um diese Seele eine innere Halbleiterabschirmung (2), eine dielektrische Schicht (3), eine äußere Halbleiterabschirmung (4) und eine äußere Schutzverstärkung (5), wobei die Zusatzeinrichtung einen ersten Teil (7) umfasst, welcher der Sicherung der Wiederherstellung der dielektrischen Schicht dient, einen zweiten (7) und einen dritten damit verbundenen Teil (11), die jeweils der Wiederherstellung der inneren Halbleiterschutzschicht und der äußeren Halbleiterschutzschicht dienen, **dadurch gekennzeichnet**, dass die ersten und zweiten Teile der Verbindungszusatzeinrichtung identisch und simultan in einer polymeren, isolierenden Matrix ausgebildet sind, die zumindest einen polymeren Leiter umfasst, eingeschlossen in der polymeren Matrix, mit einem Massenverhältnis entsprechend der resultierenden elektrischen Leitfähigkeit der ersten und zweiten Teile und niedriger als 10⁻¹⁴ S/cm für eine Gleichstromnutzung und niedriger als 10⁻¹⁰ S/cm für eine Wechselstromnutzung, und dadurch, dass der dritte Teil (11) eine elektrische Leitfähigkeit unter 1 S/cm hat.

2. Einrichtung nach Anspruch 1, welche eine Muffe bildet, mit einer abgesetzten Innenbohrung, welche zumindest den äußeren Halbleiterschutz teilweise umgibt sowie die unten angrenzende dielektrische Schicht des Kabels, und die in einem ersten Endbereich der Bohrung (17, 18, 19) einen Innenquerschnitt hat, welcher im Wesentlichen identisch zu dem Außenquerschnitt einer der zwei peripheren Schichten ist, definiert durch den äußeren Halbleiterschutz und die äußere Schutzverstärkung des Kabels, dadurch gekennzeichnet, dass die Muffe (8, 9) in einem zweiten Bereich der Bohrung (18, 19) einen Innenquerschnitt aufweist, der im Wesentlichen identisch zu dem Querschnitt der Seele ist, sowie einen einzelnen Absatz zwischen dem ersten und zweiten Bereich der Bohrung (18, 19).

3. Einrichtung nach Anspruch 2, dadurch gekennzeichnet, dass sie einen einzelnen und rechtwinkligen Absatz zwischen den ersten und zweiten Bereichen der Bohrung (18) aufweist.

4. Einrichtung nach Anspruch 2, dadurch gekennzeichnet, dass sie einen einzelnen und kegelstumpfartigen Absatz zwischen den ersten und zweiten Bereichen der Bohrung (19) aufweist.

5. Energiekabel, ausgestattet mit der Einrichtung nach einem der Ansprüche 2 bis 4, dadurch gekennzeichnet, dass der Endbereich des Kabels gleichzeitig durchgehend blank ist, ausgehend von zumindest dem äußeren Halbleiterschutz (4) bis zu der Seele (1), und die Einrichtung trägt (8, 9, 21), die einen Innenquerschnitt hat, der an den derart blanken Endbereich angepasst und in Kontakt mit diesem ist.

6. Energiekabel nach Anspruch 5 und mit einem anderen Energiekabel mit einem ebenso blanken Endbereich verbunden durch ein Verbindungselement, dadurch gekennzeichnet, dass die Einrichtung direkt auf das Verbindungselement (20) sowie beiderseits auf die blanken Endbereiche der Kabel (10A, 10B) aufgeformt ist und mit dem Verbindungselement eine Verbindung der Kabel bildet.

## Claims

1. Power cable jointing accessory (12) fitted to a stripped end part of said cable (10) and adapted to provide insulation around said stripped end part, said cable including a conductive core (1) and, in succession around said core, an inner semiconductor screen (2), a insulative layer (3), an outer semiconductor screen (4) and an outer protective sheath (5) and said accessory including a first part (7) reconstituting said insulative layer, associated second (7) and third (11) parts reconstituting said inner semiconductor screen and said outer semiconductor screen respectively, characterized in that said first and second parts of said jointing accessory are made identically and simultaneously from an insulative polymer matrix containing at least one conductive polymer incorporated in said polymer matrix with a concentration by weight such that the resulting electrical conductivity of said first and second parts is less than 10⁻¹⁴ S/cm for DC use and less than 10⁻¹⁰ S/cm for AC use, and in that said third part (11) has an electrical conductivity less than 1 S/cm.

2. Accessory according to claim 1 and constituting a sleeve with an internally shouldered bore partly surrounding at least the outer semiconductor screen and the underlying insulative layer of said cable and having in a first end portion of said bore (17, 18, 19) an inside cross section substantially identical to the outside cross section of one of the two peripheral layers defined by said outer semiconductor screen and the outer protective sheath of said cable, characterized in that said sleeve (8, 9) has over a second portion of said bore (18, 19) an inside cross section substantially identical to the cross section of said core and a single shoulder between said first and second portions of said bore (18, 19).

3. Accessory according to claim 2 characterized in that it has a single right-angle shoulder between said first and second portions of said bore (18).

4. Accessory according to claim 2 characterized in that it has a single frustoconical shoulder between said first and second portions of said bore (19).

5. Power cable fitted with the accessory according to any one of claims 2 to 4 characterized in that said end part of said cable is stripped continuously and simultaneously from at least said outer semiconductor screen (4) to said core (1) and carries said accessory (8, 9, 21) of appropriate inside cross section in contact with the stripped end part.

6. Power cable according to claim 5 and connected by a connection member to another power cable with a stripped end part, characterized in that said accessory is moulded directly onto said connection member (20) and at each end thereof onto the stripped end parts of said cables (10A, 10B) and constitutes with said connection member a joint between said cables.
